# EUROPÄISCHE PATENTSCHRIFT

(11) **EP 2 930 031 B1**
(45) Veröffentlichungstag und Bekanntmachung des Hinweises auf die Patenterteilung: **17.01.2018**
(21) Anmeldenummer: 14164042.5
(22) Anmeldetag: 09.04.2014
(51) Int. Cl.: B44C 5/04, E04F 13/00, E04F 15/00, B05D 3/12, B05D 1/28, B44C 5/06, B44F 9/02, B44F 9/04, E04F 15/10, E04C 2/22, E04C 2/00, E04C 2/16, B23B 41/00

(54) **WPC-Dekorpaneel mit porenarmer Profilkante und Verfahren zur Herstellung**
WPC decorative panel with low porosity profile edge and method for producing the same
Panneau décoratif en composite bois-plastique (WPC) doté d'un bord profilé peu poreuse et son procédé de fabrication

(43) Veröffentlichungstag der Anmeldung: 14.10.2015
(73) Patentinhaber: Akzenta Paneele + Profile GmbH, 56759 Kaisersesch (DE)
(72) Erfinder: Hannig, Hans-Jürgen, 51427 Bergisch Gladbach (DE)
(74) Vertreter: Michalski Hüttermann & Partner Patentanwälte mbB

(56) Entgegenhaltungen:
- EP-A1- 2 708 374
- EP-A2- 2 264 259
- US-A- 5 405 705

## Beschreibung

Die vorliegende Erfindung betrifft WPC-Dekorpaneel mit einer porenarmen Profilkante sowie ein Verfahren zur Herstellung von insbesondere direktbedruckten Dekorpaneelen mit einer porenarmen Profilkante.

Dekorierte Platten bzw. Dekorpaneele sind an sich bekannt und werden in vielfältiger Weise zur Verkleidung von Wände, Decken oder Fußböden verwendet. Sie bestehen üblicherweise aus einem Träger, beziehungsweise Kern, aus einem festen Material, beispielsweise einem Holzwerkstoff, der auf mindestens einer Seite mit einer Dekorschicht und einer Deckschicht sowie gegebenenfalls mit weiteren Schichten, beispielsweise einer Verschleißschicht, versehen ist. Die Dekorschicht ist üblicherweise ein gedrucktes Papier, das mit einem Harz imprägniert ist. Auch die Deckschicht und die übrigen Schichten weisen vielfach ein Harz auf.

Der Träger eines solchen Dekorpaneels besteht meistens aus Holz bzw. einem Holzwerkstoff wie z.B. einer MDF- oder HDF-Platte oder einer OSB-Platte, auf welche eine entsprechende Dekorierung, z.B. durch aufbringen eines Dekorblattes aus Papier, sowie in der Regel weitere Deckschichten aufgebracht werden. Trotz dieses Schichtenaufbaues besteht für Dekorpaneele auf Basis entsprechender Träger aus Holzwerkstoffen die Gefahr, dass diese bei Feuchtigkeitseinfluss aufquellen und so zu einer Beschädigung des Paneels führen.

Die Gefahr des Aufquellens durch Feuchtigkeit reduziert sich signifikant bei der Verwendung alternativer Materialien als Träger, wie beispielsweise Kunststoff oder Holz-Polymer-Composite (WPC, wood-plastic-composite). Bei WPC handelt es sich um eine Mischung aus Holzpartikeln und Kunststoff, welche durch ein geeignetes Herstellverfahren zu einem homogenen Composite-Material gemischt werden, welches kunststoffähnliche Verarbeitungseigenschaften aufweist.
Bei der Verarbeitung von plattenförmigen Trägern auf Basis eines WPCs werden die plattenförmigen Träger meist als großformatige Platte verarbeitet, welche innerhalb des Verarbeitungsprozesses in eine Mehrzahl von Paneelen gewünschter Größe zerteilt werden. Die Paneelen werden dann in der Regel auch noch an wenigstens einer Kante mit einer funktionellen Profilierung wie beispielsweise einem Nut-Feder-Profil oder einem Verriegelungsprofil versehen, mittels welcher sich die Paneele bei der Montage zu einer verbundenen Fläche zusammenfügen lassen.
Ein Nachteil beim Zuschnitt bzw. der Profilierung der plattenförmigen Träger ist dabei, dass an den Schnittflächen Holzfasern des WPC-Materials offen liegen können, welche bei Feuchtigkeitseinwirkung quellen und so zu einer Beschädigung des Paneels führen können. Es ist daher die Aufgabe der vorliegenden Erfindung, ein diesbezüglich verbessertes WPC-Dekorpaneel sowie ein Verfahren zur Herstellung eines solchen WPC-Dekorpaneels bereitzustellen.
Gelöst wird diese Aufgabe durch ein Paneel gemäß Anspruch 1 sowie ein Verfahren gemäß Anspruch 4.

Patentdokument EP 2 264 259 A2 offenbart ein Substrat und eine UV geschützte Oberflächeschicht zur verwendung als fussbodenbelag. Mit der Erfindung wird somit ein Dekorpanel mit einem plattenförmigen Träger aus einem wood-plastic-composit (WPC) Werkstoff vorgeschlagen, wobei der plattenförmige Träger in zumindest einem Randbereich eine Profilierung und/oder Schnittkante aufweist, welches dadurch gekennzeichnet, dass die Profilierung und/oder Schnittkante eine im Wesentlichen geschlossene Oberfläche aufweist.

Eine geschlossene Oberfläche im Sinne der Erfindung ist dabei eine solche, bei welcher sich im Wesentlichen keine offenen Holzfasern an der direkten Oberfläche finden, sondern die Oberfläche im Wesentlichen aus einer geschlossenen Kunststoffschicht besteht. Dies schließt nicht aus, dass sich auf der Oberfläche Holzfasern befinden, jedoch sind diese derart von Kunststoff umgeben, dass eine Feuchtigkeit in die Holzfasern eindringen kann.

Unter dem Begriff "dekoriertes Wand- oder Bodenpaneel" beziehungsweise "Dekorpaneel" sind im Sinne der Erfindung insbesondere Wand-, Decken, oder Bodenpannele zu verstehen, welche ein auf eine Trägerplatte aufgebrachtes eine Dekorvorlage nachbildendes Dekor aufweisen. Dekorpaneele werden dabei in vielfältiger Weise sowohl im Bereich des Innenausbaus von Räumen, als auch zur dekorativen Verkleidung von Bauten, beispielsweise im Messebau, verwendet. Eine der häufigsten Einsatzbereiche von Dekorpaneelen ist deren Nutzung als Fußbodenbelag. Die Dekorpaneele weisen dabei vielfach ein Dekor auf, welches einen Naturwerkstoff nachempfinden soll.

Beispiele für solche nachempfundenen Naturwerkstoffe beziehungsweise Dekorvorlagen sind Holzarten wie beispielsweise Ahorn, Eiche, Birke, Kirsche, Esche, Nussbaum, Kastanie, Wenge oder auch exotische Hölzer wie Panga-Panga, Mahagoni, Bambus und Bubinga. Darüber hinaus werden vielfach Naturwerkstoffe wir Steinoberflächen oder Keramikoberflächen nachempfunden.

Entsprechend kann unter einer "Dekorvorlage" im Sinne der vorliegenden insbesondere verstanden werden ein derartiger originaler Naturwerkstoff beziehungsweise zumindest eine Oberfläche eines solchen, der durch das Dekor imitiert beziehungsweise nachempfunden werden soll.

Unter einem "schüttfähigen" Material kann insbesondere ein Material verstanden werden, welches durch einen Schüttvorgang beziehungsweise Streuvorgang auf eine Unterlage aufgebracht werden kann. Dabei kann das Material als Fluid vorliegen oder insbesondere als schüttfähiger Feststoff.

Ferner kann unter einem "Granulat" beziehungsweise einem "granularen Material" ein Feststoff beziehungsweise ein Haufwerk eines Feststoffs verstanden werden, welcher eine Vielzahl fester Partikel, wie etwa Körner oder Kugeln, umfasst beziehungsweise daraus besteht. Beispielhaft aber nicht abschließend seien hier körnige oder pulverförmige Materialien genannt.

Unter einem "Träger" kann insbesondere eine in einem fertig gestellten Paneel als Kern beziehungsweise als Basislage dienende Lage verstanden werden, die insbesondere einen Werkstoff umfassend einen Kunststoff und Holzfasern und/oder Holzpartikel aufweisen kann. Beispielsweise kann der Träger dem Paneel bereits eine geeignete Stabilität verleihen oder zu dieser beitragen.

Unter einem "bahnartigen Träger" kann dabei ein Träger verstanden werden, der etwa in seinem Herstellungsprozess eine bahnartige und damit im Vergleich zu seiner Dicke beziehungsweise Breite deutlich größere Länge aufweist und deren Länge beispielsweise größer als 15 Meter betragen kann.

Unter einem "plattenförmigen Träger" kann dabei ferner im Sinne der vorliegenden Erfindung ein Träger verstanden werden, der durch Vereinzelung aus dem bahnartigen Träger geformt ist und in der Form einer Platte ausgebildet ist. Ferner kann der plattenförmige Träger bereits die Form und/oder Größe des herzustellenden Paneels vorgeben. Jedoch kann der plattenförmige Träger auch als Großplatte vorgesehen sein. Eine Großplatte im Sinne der Erfindung ist dabei insbesondere ein Träger, dessen Abmessungen die Abmessungen der letztendlichen Dekorpaneele um ein mehrfaches überschreiten und welche im Laufe des Herstellungsverfahrens in eine entsprechende Mehrzahl von Dekorpaneelen zerteilt wird, beispielsweise durch Sägen, Laser- oder Wasserstrahlschneiden. Beispielsweise kann die Großplatte dem bahnförmigen Träger entsprechen.

"Holzwerkstoffe" im Sinne der Erfindung sind insbesondere Holzwerkstoffe wie Holz-Polymer-Werkstoffe (Wood Plastic Composite, WPC).

Im Sinne der Erfindung sind unter dem Begriff "Faserwerkstoffe" Materialien wie beispielsweise Papier und Vliese auf Basis pflanzlicher, tierischer, mineralischer oder auch künstlicher Fasern zu verstehen, ebenso wie Pappen. Beispiele sind Faserwerkstoffe aus pflanzlichen Fasern und neben Papieren und Vliesen aus Zellstofffasern Platten aus Biomasse wie Stroh, Maisstroh, Bambus, Laub, Algenextrakte, Hanf, Baumwolle oder Ölpalmenfasern. Beispiele für tierische Faserwerkstoffe sind etwa keratinbasierte Materialien wie beispielsweise Wolle oder Rosshaar. Beispiele für mineralische Faserwerkstoffe sind aus Mineralwolle oder Glaswolle.

Gemäß einer Ausgestaltung kann ein Trägermaterial auf Basis eines Kunststoffs oder eines Holz-Kunststoff-Composite-Werkstoffs (WPC) bereitgestellt werden. Beispielsweise kann die Trägerplatte aus einem thermoplastischen, elastomeren oder duroplastischen Kunststoff ausgebildet sein. Des Weiteren sind Recyclingwerkstoffe aus den genannten Materialien im Rahmen des erfindungsgemäßen Verfahrens einsetzbar. Bevorzugt als Plattenmaterial können dabei insbesondere thermoplastische Kunststoffe, wie Polyvinylchlorid, Polyolefine (beispielsweise Polyethylen (PE), Polypropylen (PP), Polyamide (PA), Polyurethane (PU), Polystyrol (PS), Acrylnitril-Butadien-Styrol (ABS), Polymethylmethacrylat (PMMA), Polycarbonat (PC), Polyethylenterephthalat (PET), Polyetheretherketon (PEEK) oder Mischungen oder Co-Polymerisate diese. Dabei können unabhängig von dem Grundmaterial des Trägers beispielsweise Weichmacher vorgesehen sein, die etwa in einem Bereich von ≥0 Gew.-% bis ≤ 20 Gew.-%, insbesondere ≤ 10 Gew.-%, vorzugsweise ≤ 7 Gew.-%, beispielsweise in einem Bereich von ≥ 5 Gew.-% bis ≤ 10 Gew.-% vorliegen können. Ein geeignete Weichmacher umfasst etwa den unter der Handelsbezeichnung "Dinsch" von der Firma BASF vertriebenen Weichmacher. Ferner können als Ersatz für herkömmliche Weichmacher Copolymere, wie etwa Acrylate oder Methacrylate, vorgesehen sein.

Insbesondere thermoplastische Kunststoffe bieten auch den Vorteil, dass die aus ihnen hergestellten Produkte sehr leicht rezykliert werden können. Es können auch Recycling-Materialien aus anderen Quellen verwendet werden. Hierdurch ergibt sich eine weitere Möglichkeit zur Senkung der Herstellungskosten.

Derartige Träger sind dabei sehr elastisch beziehungsweise federnd, was einen komfortablen Eindruck beim Begehen erlaubt und ferner die auftretenden Geräusche bei einem Begehen im Vergleich zu herkömmlichen Materialien reduzieren kann, somit eine verbesserter Trittschall realisierbar sein kann.

Darüber hinaus bieten die vorgenannten Träger den Vorteil einer guten Wasserfestigkeit, da sie eine Quellung von 1% oder weniger aufweisen. Dies gilt in überraschender Weise neben reinen Kunststoffträgern auch für WPC-Werkstoffe, wie diese nachfolgend im Detail erläutert sind.

In besonders vorteilhafter Weise kann das Trägermaterial Holz-Polymer-Werkstoffe (Wood Plastic Composite, WPC) aufweisen oder daraus bestehen. Hier kann beispielhaft ein Holz und ein Polymer geeignet sein, welches in einem Verhältnis von 40/60 bis 70/30, beispielsweise 50/50 vorliegen kann. Als Polymere Bestandteile können etwa Polypropylen, Polyethylen oder ein Copolymer aus den beiden vorgenannten Materialien verwendet werden. Derartige Materialien bieten den Vorteil, dass diese bereits bei geringen Temperaturen, wie etwa in einem Bereich von ≥ 180°C bis ≤ 200°C in dem vorbeschriebenen Verfahren zu einem Träger geformt werden können, so dass eine besonders effektive Prozessführung, etwa mit beispielhaften Liniengeschwindigkeiten in einem Bereich von 6m/min, ermöglicht werden kann. Beispielsweise sind für ein WPC-Produkt mit einer 50/50 Verteilung der Holz- und Polymeranteile bei einer beispielhaften Produktstärke von 4,1mm möglich, was einen besonders effektiven Herstellungsprozess ermöglichen kann.

Ferner können so sehr stabile Paneele erzeugt werden, die weiterhin eine hohe Elastizität aufweisen, was insbesondere für eine effektive und kostengünstige Ausgestaltung von Verbindungselementen an dem Randbereich des Trägers und ferner bezüglich einer Trittschalldämmung von Vorteil sein kann. Ferner kann auch die vorgenannte gute Wasserverträglichkeit mit einer Quellung von unter 1% bei derartigen WPC-Materialien ermöglicht werden. Dabei können WPC-Werkstoffe beispielsweise Stabilisatoren und/oder andere Additive aufweisen, welche bevorzugt im Kunststoffanteil vorliegen können.

Weiterhin kann es besonders vorteilhaft sein, dass das Trägermaterial ein PVC-basiertes Material umfasst oder daraus besteht. Auch derartige Materialien können in besonders vorteilhafter Weise für hochwertige Paneele dienen, welche etwa auch in Feuchträumen problemlos verwendbar sind. Ferner bieten sich auch PVC-basierte Trägermaterialien für einen besonders effektiven Herstellungsprozess an, da hier etwa Liniengeschwindigkeiten von 8m/min bei einer beispielhaften Produktstärke von 4,1mm möglich sein können, was einen besonders effektiven Herstellungsprozess ermöglichen kann. Ferner weisen auch derartige Träger eine vorteilhafte Elastizität und Wasserverträglichkeit auf, was zu den vorgenannten Vorteilen führen kann.

Bei Kunststoff-basierten Paneelen wie auch bei WPC-basierten Paneelen können dabei mineralische Füllstoffe von Vorteil sein. Besonders geeignet sind hier etwa Talk oder auch Kalziumcarbonat (Kreide), Aluminiumoxid, Kieselgel, Quarzmehl, Holzmehl, Gips.

Beispielsweise kann Kreide vorgesehen sein in einem Bereich von ≥ 30 Gew.-% bis ≤ 70 Gew.-%, wobei durch die Füllstoffe, insbesondere durch die Kreide insbesondere der Schlupf des Trägers verbessert werden kann. Auch können sie in bekannter Weise eingefärbt sein. Insbesondere kann es vorgesehen sein, dass das Plattenmaterial ein Flammschutzmittel aufweist.

Gemäß einer besonders bevorzugten Ausgestaltung der Erfindung besteht das Trägermaterial aus einer Mischung eines PE/PP Blockcopolymers mit Holz. Dabei kann der Anteil des PE/PP Blockcopolymers sowie der Anteil des Holz zwischen ≥45 Gew.-% und ≤55 Gew.-% liegen. Desweiteren kann das Trägermaterial zwischen ≥0 Gew.-% und ≤10 Gew.-% weiterer Additive, wie beispielsweise Fließhilfsmittel, Thermostabilisatoren oder UV-Stabilisatoren aufweisen. Die Partikelgröße des Holzes liegt dabei zwischen >0µm und ≤600µm mit einer bevorzugten Partikelgrößenverteilung D₅₀ von ≥400µm. Insbesondere kann das Trägermaterial dabei Holz mit einer Partikelgrößenverteilung D₁₀ von ≥400µm aufweisen. Die Partikelgrößenverteilung ist dabei auf den volumetrischen Durchmesser bezogen und bezieht sich auf das Volumen der Partikel. Besonders bevorzugt wird dabei das Trägermaterial als granulierte oder pelletierte vorextrudierte Mischung aus einem PE/PP Blockcopolymer mit Holzpartikeln der angegeben Partikelgrößenverteilung bereitgestellt. Das Granulat und/oder die Pellets können dabei bevorzugt etwa eine Korngröße in einem Bereich von ≥ 400µm bis ≤ 10mm, bevorzugt ≥ 600µm bis ≤ 10mm aufweisen, insbesondere ≥ 800µm bis ≤ 10mm.

Gemäß einer weiteren bevorzugten Ausgestaltung der Erfindung besteht das Trägermaterial aus einer Mischung eines PE/PP Polymerblends mit Holz. Dabei kann der Anteil des PE/PP Polymerblends sowie der Anteil des Holz zwischen ≥45 Gew.-% und ≤55 Gew.-% liegen. Desweiteren kann das Trägermaterial zwischen ≥0 Gew.-% und ≤10 Gew.-% weiterer Additive, wie beispielsweise Fließhilfsmittel, Thermostabilisatoren oder UV-Stabilisatoren aufweisen. Die Partikelgröße des Holzes liegt dabei zwischen >0µm und ≤600µm mit einer bevorzugten Partikelgrößenverteilung D₅₀ von ≥400µm. Insbesondere kann das Trägermaterial dabei Holz mit einer Partikelgrößenverteilung D₁₀ von ≥400µm aufweisen. Die Partikelgrößenverteilung ist dabei auf den volumetrischen Durchmesser bezogen und bezieht sich auf das Volumen der Partikel. Besonders bevorzugt wird dabei das Trägermaterial als granulierte oder pelletierte vorextrudierte Mischung aus einem PE/PP Polymerblend mit Holzpartikeln der angegeben Partikelgrößenverteilung bereitgestellt. Das Granulat und/oder die Pellets können dabei bevorzugt etwa eine Korngröße in einem Bereich von ≥ 400µm bis ≤ 10mm, bevorzugt ≥ 600µm bis ≤ 10mm aufweisen, insbesondere ≥ 800µm bis ≤ 10mm.

In einer weiteren Ausgestaltung der Erfindung besteht das Trägermaterial aus einer Mischung eines PP-Homopolymers mit Holz. Dabei kann der Anteil des PP-Homopolymers sowie der Holzanteil zwischen ≥45 Gew.-% und ≤55 Gew.-% liegen. Desweiteren kann das Trägermaterial zwischen ≥0 Gew.-% und ≤10 Gew.-% weiterer Additive, wie beispielsweise Fließhilfsmittel, Thermostabilisatoren oder UV-Stabilisatoren aufweisen. Die Partikelgröße des Holzes liegt dabei zwischen >0µm und ≤600µm mit einer bevorzugten Partikelgrößenverteilung D₅₀ von ≥400µm. Insbesondere kann das Trägermaterial dabei Holz eine Partikelgrößenverteilung D₁₀ von ≥400µm aufweisen. Die Partikelgrößenverteilung ist dabei auf den volumetrischen Durchmesser bezogen und bezieht sich auf das Volumen der Partikel. Besonders bevorzugt wird dabei das Trägermaterial als granulierte oder pelletierte vorextrudierte Mischung aus einem PP-Homopolymer mit Holzpartikeln der angegeben Partikelgrößenverteilung bereitgestellt. Das Granulat und/oder die Pellets können dabei bevorzugt etwa eine Korngröße in einem Bereich von ≥ 400µm bis ≤ 10mm, bevorzugt ≥ 600µm bis ≤ 10mm aufweisen, insbesondere ≥ 800µm bis ≤ 10mm. In einer weiteren Ausgestaltung der Erfindung besteht das Trägermaterial aus einer Mischung eines PVC-polymers mit Kreide. Dabei kann der Anteil des PVC-Polymers sowie der Kreideanteil zwischen ≥45 Gew.-% und ≤55 Gew.-% liegen. Desweiteren kann das Trägermaterial zwischen ≥0 Gew.-% und ≤10 Gew.-% weiterer Additive, wie beispielsweise Fließhilfsmittel, Thermostabilisatoren oder UV-Stabilisatoren aufweisen. Die Partikelgröße der Kreide liegt dabei zwischen >0µm und ≤600µm mit einer bevorzugten Partikelgrößenverteilung D₅₀ von ≥400µm. Insbesondere kann das Trägermaterial dabei Kreide mit einer Partikelgrößenverteilung D₁₀ von ≥400µm aufweisen. Die Partikelgrößenverteilung ist dabei auf den volumetrischen Durchmesser bezogen und bezieht sich auf das Volumen der Partikel. Besonders bevorzugt wird dabei das Trägermaterial als granulierte oder pelletierte vorextrudierte Mischung aus einem PVC-Polymer mit Kreide der angegeben Partikelgrößenverteilung bereitgestellt. Das Granulat und/oder die Pellets können dabei bevorzugt etwa eine Korngröße in einem Bereich von ≥ 400µm bis ≤ 10mm, bevorzugt ≥ 600µm bis ≤ 10mm aufweisen, insbesondere ≥ 800µm bis ≤ 10mm.

In einer weiteren Ausgestaltung der Erfindung besteht das Trägermaterial aus einer Mischung eines PVC-Polymers mit Holz. Dabei kann der Anteil des PVC-Polymers sowie der Holzanteil zwischen ≥45 Gew.-% und ≤55 Gew.-% liegen. Desweiteren kann das Trägermaterial zwischen ≥0 Gew.-% und ≤10 Gew.-% weiterer Additive, wie beispielsweise Fließhilfsmittel, Thermostabilisatoren oder UV-Stabilisatoren aufweisen. Die Partikelgröße des Holzes liegt dabei zwischen >0µm und ≤600µm mit einer bevorzugten Partikelgrößenverteilung D₅₀ von ≥400µm. Insbesondere kann das Trägermaterial dabei Holz eine Partikelgrößenverteilung D₁₀ von ≥400µm aufweisen. Die Partikelgrößenverteilung ist dabei auf den volumetrischen Durchmesser bezogen und bezieht sich auf das Volumen der Partikel. Besonders bevorzugt wird dabei das Trägermaterial als granulierte oder pelletierte vorextrudierte Mischung aus einem PVC-Polymer mit Holzpartikeln der angegeben Partikelgrößenverteilung bereitgestellt. Das Granulat und/oder die Pellets können dabei bevorzugt etwa eine Korngröße in einem Bereich von ≥ 400µm bis ≤ 10mm, bevorzugt ≥ 600µm bis ≤ 10mm aufweisen, insbesondere ≥ 800µm bis ≤ 10mm.

Zur Bestimmung der Partikelgrößenverteilung kann auf die allgemein bekannten Verfahren wie beispielsweise die Laserdiffraktometrie zurückgegriffen werden, mit welcher Partikelgrößen im Bereich von einigen Nanometern bis hin zu mehreren Millimetern bestimmt werden können. Mittels dieser Methode lassen sich auch D50 bzw. D10 Werte ermitteln, welche 50% bzw. 10% der gemessenen Partikel kleiner sind als der angegebene Wert.

Gemäß einer weiteren Ausgestaltung kann das Trägermaterial Mikrohohlkugeln aufweisen. Derartige Zusatzstoffe können insbesondere bewirken, dass die Dichte des Trägers und damit des erzeugten Paneels signifikant reduziert werden kann, so dass ein besonders einfacher und kostengünstiger Transport und ferner ein besonders komfortables Verlegen gewährleistet werden kann. Dabei kann insbesondere durch das Einfügen von Mikrohohlkugeln eine Stabilität des erzeugten Paneels gewährleistet werden, welche im Vergleich zu einem Material ohne Mikrohohlkugeln nicht signifikant reduziert ist. Somit ist die Stabilität für einen Großteil der Anwendungen vollkommen ausreichend. Unter Mikrohohlkugeln können dabei insbesondere Gebilde verstanden werden, welche einen hohlen Grundkörper aufweisen und eine Größe beziehungsweise einen maximalen Durchmesser aufweisen, der im Mikrometerbereich liegt. Beispielsweise können verwendbare Hohlkugeln einen Durchmesser aufweisen, welcher im Bereich von ≥ 5µm bis ≤ 100µm, beispielsweise ≥ 20µm bis ≤ 50µm liegt. Als Material der Mikrohohlkugeln kommt grundsätzlich jegliches Material in Betracht, wie beispielsweise Glas oder Keramik. Ferner können aufgrund des Gewichts Kunststoffe, etwa die auch in dem Trägermaterial verwendeten Kunststoffe, beispielsweise PVC, PE oder PP, vorteilhaft sein, wobei diese gegebenenfalls, etwa durch geeignete Zusatzstoffe, an einem Verformen während des Herstellungsverfahrens gehindert werden können.

Gemäß einer weiteren Ausgestaltung der Erfindung weist das Dekorpaneel ein mittels Direktdruck auf den plattenförmigen Träger aufgebrachtes Dekor auf. Unter dem Begriff "Direktdruck" wird im Sinne der Erfindung das Aufbringen eines Dekors direkt auf den Träger eines Paneels oder auf eine auf dem Träger aufgebrachte nicht bedruckte Faserwerkstoffschicht beziehungsweise ein Dekoruntergrund verstanden. Es können unterschiedliche Drucktechniken, wie beispielsweise Flexo-Druck, Offset-Druck oder Siebdruck zum Einsatz gelangen. Insbesondere können als Digitaldrucktechniken beispielsweise Inkjet-Verfahren oder Laserdruck-Verfahren eingesetzt werden.

Beispielsweise kann, um eine Dekorvorlage auf besonders detailgetreue und hochgenaue Weise in dreidimensionaler Form zu imitieren beziehungsweise nach zu empfinden, Das Dekor vorlagenidentisch aufgebracht werden. Insbesondere können die dreidimensionalen Dekordaten bereitgestellt werden durch ein dreidimensionales Abtasten der Dekorvorlage mittels elektromagnetischer Strahlung, beispielsweise durch einen dreidimensionalen Scanner (3D-Scanner). Dabei können eine Mehrzahl an Dekorschichten mit zumindest teilweise unterschiedlichem Flächenauftrag auf Basis bereitgestellter dreidimensionaler Dekordaten sukzessive aufgebracht wird.

Ferner können die Dekorschichten aus einer insbesondere strahlungshärtbaren Farbe und/oder Tinte ausgebildet werden. Beispielsweise kann eine UV-härtbare Farbe oder Tinte verwendet werden. In dieser Ausgestaltung kann eine besonders detailgetreue und übereinstimmende Nachbildung der Dekorvorlage erreichbar sein. Denn zum Einen kann auf diese Weise ohne das Vorsehen weiterer Maßnahmen und hochgenau eine Synchronpore erzielbar sein. Eine Synchronpore kann dabei insbesondere eine Pore oder eine andersartige Struktur sein, welche räumlich exakt dort angeordnet ist, wo sie optisch dargestellt ist durch ein mit dem optischen Dekormerkmalen übereinstimmenden haptischen Strukturierung. Dies ist im Wesentlichen in dieser Ausgestaltung automatisch der Fall, da die strukturelle Ausgestaltung eben durch die Farbe beziehungsweise Tinte erzeugt wird. Darüber hinaus weisen Dekorvorlagen, wie beispielsweise Holzwerkstoffe, oftmals eine Variation des Farbeindrucks nicht nur entlang ihrer Breite beziehungsweise Länge sondern ebenfalls entlang ihrer Tiefe auf. Auch dieser Farbeindruck beziehungsweise Farbverlauf kann insbesondere in dieser Ausgestaltung besonders detailgetreu nachempfunden werden, was auch den Gesamteindruck des Paneels noch identischer erscheinen lässt. Dabei lässt sich insbesondere dann, wenn die verwendete Farbe beziehungsweise Tinte strahlungshärtbar ist, eine besonders schnelle Verfestigung erreichen, wodurch die Mehrzahl an Schichten schnell aufeinander aufbringbar sein können, was auch den Gesamtprozess in einer geringeren Zeit realisierbar und damit besonders kostengünstig gestalten kann.

Unter dem Begriff strahlungshärtbare Farbe ist dabei im Sinne der Erfindung eine binde- und/oder füllmittelmittelhaltige sowie Farbpigmente aufweisende Zusammensetzung zu verstehen, welche induziert durch elektromagnetische Strahlung geeigneter Wellenlänge, wie beispielsweise UV-Strahlung oder Elektronenstrahlung, zumindest teilpolymerisiert werden kann.

Unter dem Begriff strahlungshärtbare Tinte ist dabei entsprechend im Sinne der Erfindung eine im Wesentlichen Füllmittel freie, Farbpigmente aufweisende Zusammensetzung zu verstehen, welche induziert durch elektromagnetische Strahlung geeigneter Wellenlänge, wie beispielsweise UV-Strahlung oder Elektronenstrahlung, zumindest teilpolymerisiert werden kann.

Dabei können die Dekorschichten jeweils in einer Dicke in einem Bereich von ≥ 5µm bis ≤ 10µm aufgebracht werden.

Es kann ferner vorgesehen sein, neben einer bezüglich Farbe und/oder Struktur positiven Abbildung ferner auch eine entsprechende negative Abbildung der Dekorvorlage aufzubringen. Im Detail kann, wie es beispielsweise von einem Positiv-Beizen beziehungsweise Negativ-Beizen für Holzwerkstoffe bekannt ist, durch die Verwendung von digitalen Daten der Farbeindruck beispielsweise einer Maserung umgekehrt werden, so dass bezüglich der Farbe beziehungsweise insbesondere helleren und dunkleren Bereichen ein Negativ entsteht. Entsprechendes ist neben dem Farbeindruck ebenfalls für die aufgebrachte Struktur möglich, so dass auch bezüglich der strukturellen Ausgestaltung ein Negativ realisierbar ist. Auch derartige Effekte sind auf Basis digitaler dreidimensionaler Daten problemlos und ohne Vorlaufzeit beziehungsweise Umbauten in einen Herstellungsprozess integrierbar.

Hinsichtlich des Verfahrens wird die Aufgabe der Erfindung durch ein Verfahren gemäß Anspruch 4 gelöst. Es wird somit Verfahren zur Herstellung eines Dekorpaneels vorgeschlagen, aufweisend die Verfahrensschritte:
- Bereitstellen eines plattenförmigen Trägers aus einem WPC Werkstoff; und
- Einbringen einer Profilierung und/oder Schnittkante in wenigstens eine Kante des plattenförmigen Trägers, welches dadurch gekennzeichnet, dass die Flächen der eingebrachten Profilierung und/oder Schnittkante einer thermischen Behandlung unterzogen werden, bei welcher der WPC Werkstoff im Bereich der Profilierung zumindest teilweise aufgeschmolzen wird und die Oberfläche verschlossen wird.

Überraschender Weise hat sich gezeigt, dass die durch eine Bearbeitung des Dekorpaneels bzw. der Trägerplatte freigelegten Holzfasern und/oder -partikel durch eine thermische Behandlung, bei welcher es zu einem Aufschmelzen der Oberfläche kommt, derart versiegelt werden können, dass das Quellverhalten bei Feuchtigkeitseinwirkung deutlich verringert werden kann. Hierdurch kann ein Aufquellen der Profilkanten und/oder Schnittflächen und die damit einhergehende Beschädigung des Dekorpaneels bei Feuchtigkeitseinfluss vermieden werden.

Der WPC-Werkstoff wird dabei lediglich oberflächennah aufgeschmolzen. Oberflächennah bedeutet dabei im Sinne der Erfindung bis zu einer Tiefe von ≤3mm, vorzugsweise ≤2mm, noch bevorzugter ≤1mm und insbesondere ≤0,8mm.

Gemäß einer Ausgestaltung des Verfahrens ist es vorgesehen, dass nach dem Profilieren oder Sägen der Dekorpaneele bzw. des plattenförmigen Trägers ein Aufschmelzen des WPC-Werkstoffes im oberflächennahen Bereich in einem dem Profilieren und/oder Sägen nachgelagerten Arbeitsschritt erfolgt. Hierzu kann beispielsweise die Verwendung eines temperierten Schmelzkopfes vorgesehen sein, welcher in seinem Profil dem in die Kante eingebrachten Profil bzw. Schnitt entspricht und über die Flächen der Profilierung bzw. Schnittflächen geführt wird, wobei der WPC-Werkstoff oberflächennah aufschmilzt.

Der Schmelzkopf wird dabei in einer Ausgestaltung der Erfindung vorzugsweise maximal auf eine Temperatur ≤30°C oberhalb der Schmelztemperatur des WPC Werkstoffes erwärmt wird

Gemäß einer weiteren Ausgestaltung der Erfindung erfolgt die Einbringung der Profilierung und/oder Schnittkante mittels eines spanabhebenden bzw. spanenden Verfahrens, wie beispielsweise Fräsen oder Sägen. Dabei kann es gemäß einer weiteren Ausgestaltung der Erfindung insbesondere Vorgesehen sein, dass das Aufschmelzen des WPC Materials mittels erwärmen des für das spanabhebende Profilieren und/oder Schneiden der wenigstens einen Kante des plattenförmigen Trägers genutzten spanabhebenden Werkzeugs auf eine Temperatur größer gleich der Schmelztemperatur und kleiner der Zersetzungstemperatur des WPC Werkstoffes erfolgt. Hierdurch kann ein zusätzlicher Arbeitsschritt vermieden werden.

Dabei kann es in einer Ausgestaltung der Erfindung vorgesehen sein, dass das spanabhebende Werkzeug maximal auf eine Temperatur oberhalb ≤30°C der Schmelztemperatur des WPC Werkstoffes temperiert wird. Dabei kann es vorgesehen sein, dass die Temperierung des spanabhebenden oder spanenden Werkzeuges durch eine Heiz- und/oder Kühleinrichtung erfolgt.

Vorzugsweise ist kann es dabei vorgesehen sein, dass die Temperatur des spanabhebenden oder spanenden Werkzeuges berührungslos überwacht wird, beispielsweise mittels eines Infrarot-Temperatursensors bzw. eines Infrarot-Thermometers. Die Temperierung des Werkzeuges kann dann vorzugsweise in Abhängigkeit der im Rahmen dieser Überwachung ermittelten Daten erfolgen.

Gemäß einer besonders bevorzugten Ausgestaltung der Erfindung erfolgt zumindest ein Teil der Temperierung des spanabhebenden und/oder spanenden Werkzeuges unter Ausnutzung der durch den spanabhebenden und/oder spanenden Bearbeitungsprozess selbst entstehenden Wärme. Diese wird durch die Reibung zwischen Werkzeug und Werkstoff hervorgerufen. Dabei kann in einer besonders bevorzugten Ausgestaltung der Erfindung vorgesehen sein, dass die Bearbeitungsgeschwindigkeit, insbesondere die Rotation des Werkzeuges und die Relativgeschwindigkeit zwischen Dekorpaneel/Trägerplatte und Schneid- bzw. Fräskopf derart eingestellt wird, dass die beim Bearbeitungsprozess entstehenden Erwärmung des Werkzeuges in einem Temperaturbereich größer gleich der Schmelztemperatur des WPC-Werkstoffes und kleiner der Zersetzungstemperatur des WPC-Werkstoffes erfolgt.

Gemäß einer weiteren Ausgestaltung der Erfindung kann es vorgesehenen sein, dass zumindest der profilierte Bereich der Kante des plattenförmigen Trägers und/oder die Schnittfläche nach dem Aufschmelzen des WPC Werkstoffes und Verschließen der Oberfläche auf eine Temperatur unterhalb des Schmelzpunktes abgekühlt wird.

Diese Abkühlung kann erfindungsgemäß beispielsweise durch einen auf die entsprechende Oberfläche gerichteten Luftstrom erfolgen. Dabei kann es insbesondere vorgesehen sein, dass der Luftstrom gekühlt ist, also eine Temperatur unterhalb der Umgebungstemperatur der Bearbeitungsstelle aufweist.

Alternativ kann die Verwendung eines temperierten Kühlkopfes vorgesehen sein, welcher in seinem Profil dem in die Kante eingebrachten Profil bzw. Schnitt entspricht und über die Flächen der Profilierung bzw. Schnittflächen geführt wird, wobei der WPC-Werkstoff entsprechend auf eine Temperatur unterhalb des Schmelzpunktes des WOPC-Werkstoffes abgekühlt wird.

Gemäß einer weiteren Ausgestaltung der Erfindung kann es vorgesehen sein, dass das Abkühlen des oberflächennah aufgeschmolzenen WPZ-Werkstoffes innerhalb eines Zeitraumes von ≤ 60s, vorzugsweise ≤ 45s, insbesondere ≤ 30s erfolgt. Hierdurch kann sichergestellt werden, dass es nicht zu einer ungewollten nachträglichen Verformung des Profils kommt.

Zur Herstellung eines fertigen Paneels kann das Verfahren weitere Verfahrensschritte umfassen, um den Träger mit einem Dekor zu versehen und dieses mit einer Schutzschicht zu beschichten. Dabei kann gegebenenfalls zunächst etwa ein Vorbehandeln des Trägers zur elektrostatischen Entladung bzw. gezielten Aufladung vor dem Aufbringen eines Dekorbildes mittels eines Direktdruckverfahrens erfolgen. Dies kann insbesondere dazu dienen, das Auftreten von Unschärfen im Laufe der Dekoraufbringung zu vermeiden. Dies ist insbesondere für Druckverfahren zum Aufbringen der Dekorschichten geeignet, da die sich im Laufe des Produktionsprozesses aufbauende elektrostatische Ladung in den zu bedruckenden Trägern zu einer Ablenkung der Farb- bzw. Tintentropfen auf ihrem Weg vom Druckkopf zur der zu bedruckenden Oberfläche führt. Die so hervorgerufene Ungenauigkeit des Farbauftrags führt zu der wahrnehmbaren Unschärfe des Druckbildes.

Dabei kann die Einrichtung zur Ableitung elektrostatischer Ladungen wenigstens eine Rolle, Bürste oder Lippe aus einem leitfähigen Material mit einer Leitfähigkeit ≥ 1*10³ Sm⁻¹ aufweisen, welche den Träger zumindest im Bereich des Druckwerks elektrisch leitend kontaktiert und welche mit einem elektrischen Massenpotential verbunden ist. Dabei kann das elektrische Massenpotential beispielsweise durch eine Erdung bereitgestellt werden. Ferner kann eine Einrichtung zur Ableitung elektrostatischer Ladungen beispielsweise eine Einrichtung zur Erzeugung einer Corona-Entladung sein.

Des Weiteren kann es vorgesehen sein, dass ein Dekoruntergrund oder Druckuntergrund auf zumindest einen Teilbereich des Trägers aufgebracht wird. Beispielsweise kann zunächst ein Primer insbesondere für Druckverfahren als Dekoruntergrund aufgebracht werden, etwa in einer Dicke von ≥ 10µm bis ≤ 60 µm. Dabei kann als Primer eine flüssige strahlungshärtende Mischung auf Basis eines Urethans oder eines Urethanacrylats, gegebenenfalls mit einem oder mehreren von einem Photoinitiator, einem Reaktivverdünner, einem UV-Stabilisator, einem Rheologiemittel wie einem Verdicker, Radikalfänger, Verlaufshilfsmittel, Entschäumer oder Konservierungsmittel, Pigment und/oder einem Farbstoff eingesetzt werden. Beispielsweise kann das Urethanacrylat in Form von reaktiven Oligomeren bzw. Prepolymeren in der Primer-Zusammensetzung enthalten sein. Unter dem Begriff "reaktives Oligomer" bzw. "Prepolymer" ist dabei im Sinne der Erfindung eine Urethanacrylat-Einheiten aufweisende Verbindung zu verstehen, welche strahlungsinduziert, ggf. unter Zusatz eines reaktiven Bindemittels oder eines Reaktivverdünners zu Urethan-Polymer oder Urethanacrylat-Polymer reagieren kann. Urethanacrylate im Sinne der Erfindung sind dabei Verbindungen, welche im Wesentlichen aus einem oder mehreren aliphatischen Strukturelementen und Urethangruppen aufgebaut sind. Aliphatische Strukturelemente umfassen sowohl Alkylengruppen, vorzugsweise mit 4 bis 10 C-Atomen, als auch Cycloalkylengruppen mit vorzugsweise 6 bis 20 C-Atomen. Sowohl die Alkylen- als auch die Cycloalkylengruppen können mit C₁-C₄-Alkyl, insbesondere mit Methyl, ein- oder mehrfach substituiert sein sowie ein oder mehrere nicht benachbarte Sauerstoffatome enthalten. Die aliphatischen Strukturelemente sind gegebenenfalls überquartäre oder tertiäre Kohlenstoffatome, über Harnstoffgruppen, Biureth-, Urethdion-, Allophanat-, Cyanurat-, Urethan-, Ester- oder Amidgruppen oder über Ethersauerstoff oder Aminstickstoff miteinander verbunden. Ferner können Urethanacrylate im Sinne der Erfindung auch ethylenisch ungesättigte Strukturelemente aufweisen. Hierbei handelt es sich vorzugsweise um Vinyl- oder Allylgruppen, die auch mit C₁-C₄-Alkyl, insbesondere Methyl substituiert sein können und welche sich insbesondere von α,β-ethylenisch ungesättigten Carbonsäuren bzw. deren Amiden ableiten. Besonders bevorzugte ethylenisch ungesättigte Struktureinheiten sind Acryloyl- und Me-thacryloylgruppen wie Acrylamido und Methacrylamido und insbesondere Acryloxy und Methacryloxy. Strahlungshärtbar im Sinne der Erfindung bedeutet, dass die Primerzusammensetzung induziert durch elektromagnetische Strahlung geeigneter Wellenlänge, wie beispielsweise UV-Strahlung, oder Elektronenstrahlung zumindest teilpolymerisiert werden kann.

Die Verwendung von strahlungshärtbaren Primern auf Basis von Urethanacrylaten ermöglicht in besonders vorteilhafter Weise eine sich umgehend an den Auftrag und die strahlungsinduzierte Härtung der Primerschicht anschließende Aufbringung eines Dekor, beispielsweise mittel Digitaldrucktechnik. Dabei sorgt die Primerschicht für eine gute Haftung des aufgebrachten Dekors auf der mit dem Primer beschichteten Trägeroberfläche. Dabei besitzen Urethanacrylate den Vorteil einer guten Haftung sowohl gegenüber dem Trägermaterial, als auch gegenüber der Dekorschicht, also der Dekorfarbe oder -tinte. Dies ist unter anderem durch die bei dieser Art der Polymere auftretenden Polymerisationsreaktionen zu begründen, bei welcher zum einen eine strahlungsinduzierte radikalische Polymerisation der OH-Gruppen auftritt, zum anderen eine Nachhärtung des Polymers über die NCO-Gruppen. Dies führt dazu, dass nach der strahlungsinduzierten Härtung umgehend eine klebfreie und weiterbearbeitbare Oberfläche erhalten wird, während die endgültigen Eigenschaften der Primerschicht auch durch die NCO-Gruppen basierte Nachhärtung beeinflusst werden und für eine sichere Bindung zum Trägermaterial sorgen. Darüber hinaus stellt die auftretende Nachhärtung sicher, dass eine hinreichende Schichtstabilität auch in weniger oder nicht belichteten Bereichen des Trägers erreicht wird. Hierdurch lassen sich mit dem erfindungsgemäßen Verfahren insbesondere auch vorstrukturierte Träger, also Träger, deren Oberfläche bereits eine dreidimensionale Strukturierung aufweisen, sicher mit Primerschicht versehen, wodurch sichergestellt ist, dass das anschließend aufgebrachte Dekor haftfest mit dem Träger verbunden ist.

Der Primer kann im erfindungsgemäßen Verfahren bevorzugt mittels Gummiwalzen, Gießmaschine oder durch Aufsprühen auf die Trägerplatte aufgebracht werden. Bevorzugt wird der Primer in einer Menge zwischen ≥1 g/m² und ≤100 g/m², vorzugsweise zwischen ≤10 g/m² und ≤50 g/m², insbesondere zwischen ≥20 g/m² und ≤40 g/m² aufgetragen. Im Anschluss an den Auftrag des Primers auf die Trägeroberfläche erfolgt eine Bestrahlung mit einer Strahlungsquelle geeigneter Wellenlänge.

Neben der Verwendung eines Primer ist es möglich, das Dekor auf ein mit einem entsprechenden Dekor bedruckbares Dekorpapier aufzubringen, welches etwa mittels einer zuvor auf den Träger aufgebrachten Harzschicht als Verbindungsmittel vorgesehen sein kann. Ein derartiger Druckuntergrund ist sowohl für Flexo-Druck, Offset-Druck oder Siebdruckverfahren, als auch insbesondere für Digitaldrucktechniken, wie beispielsweise Inkjet-Verfahren oder Laserdruck-Verfahren geeignet. Zur Aufbringung der Harzschicht kann es vorzugsweise vorgesehen sein, dass eine Harzzusammensetzung aufgebracht wird, welche als Harzkomponente wenigstens eine Verbindung ausgewählt aus der Gruppe bestehend aus Melaminharz, Formaldehydharz, Harnstoffharz, Phenolharz, Epoxidharz, ungesättigtes Polyesterharz, Diallylphthalat oder Mischungen dieser aufweist. Dabei kann die Harzzusammensetzung beispielsweise in einer Auftragsmenge zwischen ≥5 g/m² und ≤40 g/m², vorzugsweise ≥10 g/m² und ≤30 g/m² aufgetragen werden. Ferner kann ein Papier oder Vlies mit einer Grammatur zwischen ≥30 g/m² und ≤80 g/m², vorzugsweise zwischen ≥40 g/m² und ≤70 g/m² auf den plattenförmigen Träger aufgebracht.

Des Weiteren kann erfindungsgemäß ein Aufbringen einer Schutzschicht auf zumindest einen Teilbereich des Dekors vorgesehen sein. Eine derartige Schicht zum Schutz des aufgebrachten Dekors kann insbesondere als Verschleiß- oder Deckschicht oberhalb der Dekorschicht in einem nachfolgenden Verfahrensschritt aufgebracht werden, welche insbesondere die Dekorschicht vor Abnutzung oder Beschädigung durch Schmutz, Feuchtigkeitseinfluss oder mechanische Einwirkungen, wie beispielsweise Abrieb, schützt. Beispielsweise kann es vorgesehen sein, dass die Verschleiß- und/oder Deckschicht als vorproduzierte Overlayschicht, etwa basierend auf Melamin, auf den bedruckten Träger aufgelegt und mit diesem durch Druck- und/oder Wärmeeinwirkung verbunden wird. Ferner kann es bevorzugt sein, dass zur Ausbildung der Verschleiß- und/oder Deckschicht ebenfalls eine strahlungshärtbare Zusammensetzung, wie beispielsweise ein strahlungshärtbarer Lack, wie einem Acryllack, aufgebracht wird. Dabei kann es vorgesehen sein, dass die Verschleißschicht Hartstoffe wie beispielsweise Titannitrid, Titancarbid, Siliciumnitrid, Siliciumcarbid, Borcarbid, Wolframcarbid, Tantalcarbid, Aluminiumoxid (Korund), Zirconiumoxid oder Mischungen dieser aufweist, um die Verschleißfestigkeit der Schicht zu erhöhen. Dabei kann die Auftragung beispielsweise mittels Walzen, wie Gummiwalzen oder mittels Gießvorrichtungen aufgetragen werden.

Weiterhin kann die Deckschicht zunächst teilgehärtet werden und im Anschluss eine Endlackierung mit einem Urethanacrylat und eine Endhärtung, etwa mit einem Galliumstrahler, durchgeführt werden.

Ferner kann die Deck- und/oder Verschleißschicht Mittel zur Verringerung der statischen (elektrostatischen) Aufladung des letztendlichen Laminates aufweisen. Beispielsweise kann es dazu vorgesehen sein, dass die Deck- und/oder Verschleißschicht Verbindungen wie z.B. Cholinchlorid aufweist. Das Antistatikmittel kann dabei beispielsweise in einer Konzentration zwischen ≥0,1 Gew.-% und ≤40,0 Gew.-%, bevorzugt zwischen ≥1,0 Gew.-% und ≤30,0 Gew.-% in der Deck- und/oder Zusammensetzung zur Ausbildung Verschleißschicht enthalten sein.

Des Weiteren kann es vorgesehen, dass in die Schutzschicht beziehungsweise Verschleiß- oder Deckschicht eine Strukturierung, insbesondere eine mit dem Dekor übereinstimmende Oberflächenstrukturierung durch das Einbringen von Poren eingebracht wird. Dabei kann es vorgesehen sein, dass die Trägerplatte bereits eine Strukturierung aufweist und eine Ausrichtung eines Druckwerkzeuges zur Aufbringung des Dekors und der Trägerplatte zueinander in Abhängigkeit mittels der mittels optischer Verfahren erfassten Strukturierung der Trägerplatte erfolgt. Zur Ausrichtung des Druckwerkzeuges und der Trägerplatte zueinander kann es dabei vorgesehen sein, dass eine zur Ausrichtung notwendige Relativbewegung zwischen Druckwerkzeug und Trägerplatte zueinander durch eine Verschiebung der Trägerplatte oder durch eine Verschiebung des Druckwerkzeugs erfolgt. Weiterhin kann es vorgesehen sein, dass eine Strukturierung der Dekorpaneele nach dem Auftrag der Deck- und/oder Verschleißschicht erfolgt. Hierzu kann es bevorzugt vorgesehen sein, dass als Deck- und/oder Verschleißschicht eine härtbare Zusammensetzung aufgetragen wird und ein Aushärtungsprozess nur in dem Maße erfolgt, dass lediglich eine Teilhärtung der Deck- und/oder Verschleißschicht erfolgt. In die so teilgehärtete Schicht wird mittels geeigneter Werkzeuge, wie beispielsweise einer Hartmetall-Strukturwalz oder eines Stempels, eine gewünschte Oberflächenstruktur eingeprägt. Dabei erfolgt die Prägung in Übereinstimmung mit dem aufgebrachten Dekor. Zur Gewährleistung einer hinreichenden Übereinstimmung der einzubringenden Struktur mit dem Dekor kann es vorgesehen sein, dass die Trägerplatte und das Prägewerkzeug durch entsprechende Relativbewegungen zueinander ausgerichtet werden. Im Anschluss an die Einbringung der gewünschten Struktur in die teilgehärtete Deck- und/oder Verschleißschicht erfolgt eine weitere Härtung der nun strukturierten Deck- und/oder Verschleißschicht.

Vielfach ist es vorgesehen, dass in solche Verschleiß- oder Deckschichten eine mit dem Dekor übereinstimmende Oberflächenstrukturierung eingebracht ist. Unter einer mit dem Dekor übereinstimmenden Oberflächenstrukturierung ist zu verstehen, dass die Oberfläche des Dekorpaneels eine haptisch wahrnehmbare Struktur aufweist, welche in ihrer Form und ihrem Muster dem aufgebrachten Dekor entspricht, um so eine möglichst originalgetreue Nachbildung eines natürlichen Werkstoffes auch hinsichtlich der Haptik zu erhalten.

Darüber hinaus kann auf der der Dekorseite gegenüberliegenden Seite ein Gegenzug aufgebracht werden. Dabei ist es insbesondere bevorzugt, dass der Gegenzug in einem gemeinsamen Kalandrierschritt mit den Papier oder Vlies auf der Dekorseite aufgebracht wird.

Bei einer teilweisen Profilierung des Dekorpaneels werden nicht bereits alle in dem letztendlichen Paneel vorzusehenden Profile eingebracht, sondern nur ein Teil der vorzusehenden Profile, während weitere Profile in einem anschließenden Schritt eingebracht werden. So kann es beispielsweise vorgesehen sein, dass das in einem Paneel vorzusehende dekorative Profil, wie beispielsweise eine Fase, in einem Arbeitsschritt eingebracht wird, während das funktionale Profil, beispielsweise Nut/Feder in einem nachgelagerten Arbeitsschritt eingebracht wird. Durch eine Aufbringung des Dekors erst nach dem zumindest teilweisen Profilieren des Trägers, etwa durch die vorbeschriebenen Verfahren wie beispielsweise Direktdruckverfahren, wird ein Abtragen oder Beschädigen des Dekors im Zuge der Profilierung in vorteilhafter Weise vermieden. Dadurch entspricht das Dekor auch in den Bereichen der Profilierung in detailgetreuer Weise der gewünschten Imitation beispielsweise eines Naturwerkstoffes.

Durch eine Aufbringung des Dekors erst nach dem zumindest teilweisen Profilieren des Trägers, etwa durch die vorbeschriebenen Verfahren wie beispielsweise Direktdruckverfahren, wird ein Abtragen oder Beschädigen des Dekors im Zuge der Profilierung in vorteilhafter Weise vermieden. Dadurch entspricht das Dekor auch in den Bereichen der Profilierung in detailgetreuer Weise der gewünschten Imitation beispielsweise eines Naturwerkstoffes.

Um eine besonders detailgetreue Imitierung auch in den profilierten Bereichen vorzusehen kann die für den Druck genutzte Druckvorlage im Bereich der Profilierung des Paneels verzerrungskompensiert werden. Verzerrungskompensation bedeutet dabei im Sinne der Erfindung beispielsweise für den exemplarischen Fall der Aufbringung mit einem Druckverfahren, die durch die Abweichung der Profilierung aus der Oberflächenebene des Trägers, beispielsweise bei einer Fasenflanke, hervorgerufene Verzerrung des Druckbildes durch eine Anpassung der Druckvorlage an die Abweichung kompensiert wird. Dabei kann es beispielsweise vorgesehen sein, dass die Kompensation der Verzerrung mittels Anpassung des Bildpunktabstandes, der Bildpunktgröße und/oder des Farbauftrages in Abhängigkeit des vorgesehenen Kantenprofils des fertiggestellten Dekorpaneels erfolgt. Im Falle der Bedruckung mittels Digitaldruck kann dabei die Ansteuerung des Druckkopfes in Abhängigkeit der zu kompensierenden Verzerrung erfolgen, so dass der Druckkopf beispielsweise über den profilierten Bereich hinaus ausgelenkt wird und eine Anpassung des Farbausstoßes an das Profil erfolgt.

Hierbei ist es beispielsweise möglich, dass vor dem Aufbringen der Dekorschicht des als Großplatte bereitgestellten Trägers die in einem letztendlichen Paneelverbund vorzusehenden Fugen (wie beispielsweise V-Fugen) in den Träger gefräst werden, auf den so profilierten Träger zumindest die Dekorschicht aufgebracht wird und der Träger anschließend zumindest in den profilierten Bereichen zerteilt wird. In Abhängigkeit der Zerteilungsart, wie beispielsweise Sägen, Laser- oder Wasserstrahlschneiden, kann es dabei bevorzugt vorgesehen sein, dass die benötigte Schnittzugabe in dem eingebrachten Profil berücksichtigt wird.

Beispielsweise kann der plattenförmige Träger ein Material aufweisen, das auf einem WPC-Werkstoff oder einem PVC-Werkstoff basiert. Bezüglich der genauen Zusammensetzung und der daraus resultierenden Vorteile wird explizit auf die vorstehende Beschreibung des Verfahrens verwiesen.

Gemäß einer weiteren Ausgestaltung kann es vorgesehen sein, dass das Dekorpaneel zumindest in einen Randbereich der Trägerplatte eine Profilierung aufweist. Dabei kann es insbesondere vorgesehen sein, dass das Dekor auch im Bereich der Profilierung aufgebracht ist, so dass die Profilierung vor dem Aufbringen der Dekorschicht auf den plattenförmigen Träger erfolgt. Alternativ oder ergänzend kann eine Profilierung auch nach dem Aufbringen der Dekorschicht erfolgen. Bei einer Profilierung im Sinne der Erfindung ist es vorgesehen, dass mittels geeigneter materialabhebender Werkzeuge zumindest in einen Teil der Kanten des Dekorpaneels ein dekoratives und/oder funktionales Profil eingebracht wird. Dabei ist unter einem funktionalen Profil beispielsweise die Einbringung eines Nut- und/oder Federprofils in eine Kante zu verstehen, um Dekorpaneele über die eingebrachten Profilierungen miteinander verbindbar zu gestalten. Ein dekoratives Profil im Sinne der Erfindung ist beispielsweise eine im Kantenbereich des Dekorpaneels eingebrachte Fase, um beispielsweise zwischen zwei miteinander verbundenen Paneelen nach deren Verbindung eine Fuge zu simulieren, wie sie beispielsweise bei sogenannten Landhausdielen auftritt.

## Patentansprüche

1. Dekorpanel, mit einem plattenförmigen Träger aus einem wood-plastic-composit (WPC) Werkstoff, wobei der plattenförmigen Träger in zumindest einem Randbereich eine Profilierung und/oder Schnittkante aufweist, **dadurch gekennzeichnet, dass** die Profilierung und/oder Schnittkante eine im Wesentlichen geschlossene Oberfläche aufweist.

2. Dekorpaneel gemäß Anspruch 1, wobei der WPC Werkstoff einen Kunststoff aus der Gruppe bestehend aus Polyvinylchlorid (PVC), Polyethylen (PE), Polypropylen (PP), Polyamide (PA), Polystyrol (PS), Acrylnitril-Butadien-Styrol (ABS), Polymethylmethacrylat (PMMA), Polycarbonat (PC), Polyethylenterephthalat (PET), Polyetheretherketon (PEEK), Polyisobutylen (PIB), Polybutylen (PB), oder Mischungen oder Co-Polymerisate dieser aufweist.

3. Dekorpaneel gemäß einem der vorgehenden Ansprüche, wobei dieses ein mittels Direktdruck auf den plattenförmigen Träger aufgebrachtes Dekor aufweist.

4. Verfahren zur Herstellung eines Dekorpaneels, aufweisend die Verfahrensschritte:
- Bereitstellen eines plattenförmigen Trägers aus einem WPC Werkstoff; und
- Einbringen einer Profilierung und/oder Schnittkante in wenigstens eine Kante des plattenförmigen Trägers,
**dadurch gekennzeichnet, dass** die Flächen der eingebrachten Profilierung und/oder Schnittkante einer thermischen Behandlung unterzogen werden, bei welcher der WPC Werkstoff im Bereich der Profilierung zumindest teilweise aufgeschmolzen wird und die Oberfläche verschlossen wird.

5. Verfahren gemäß Anspruch 4, wobei die Einbringung der Profilierung und/oder Schnittkante mittels eines spanabhebenden oder spanenden Verfahrens erfolgt.

6. Verfahren gemäß Anspruch 5, wobei das Aufschmelzen des WPC Werkstoffes mittels erwärmen des für das spanabhebende oder spanende Profilieren und/oder Schneiden der wenigstens einen Kante des plattenförmigen Trägers genutzten spanabhebenden oder spanende Werkzeugs auf eine Temperatur größer gleich der Schmelztemperatur und kleiner der Zersetzungstemperatur des WPC Werkstoffes erfolgt.

7. Verfahren gemäß Anspruch 6, wobei das spanabhebende oder spanende Werkzeug maximal auf eine Temperatur 30°C oberhalb der Schmelztemperatur des WPC Werkstoffes temperiert wird.

8. Verfahren gemäß einem der Ansprüche 6 oder 7, wobei die Temperierung des spanabhebenden Werkzeugs durch eine Heiz- und/oder Kühleinrichtung erfolgt.

9. Verfahren gemäß einem der Ansprüche 5 bis 8, wobei dass die Temperatur des spanabhebenden oder spanenden Werkzeuges berührungslos überwacht wird.

10. Verfahren gemäß einem der Ansprüche 4 bis 8, wobei zumindest der profilierte Bereich der Kante des plattenförmigen Trägers nach dem Aufschmelzen des WPC Werkstoffes und Verschließen der Oberfläche auf eine Temperatur unterhalb des Schmelzpunktes abgekühlt wird.

11. Verfahren gemäß Anspruch 10, wobei das Abkühlen innerhalb eines Zeitraumes von ≤ 60s, vorzugsweise ≤ 45s, insbesondere ≤ 30s erfolgt.

12. Verfahren gemäß einem der Ansprüche 4 bis 10, wobei diese nach dem Verfahrensschritt des Bereitstellens des plattenförmigen Trägers das Aufbringen eines Dekors mittels Direktdruckverfahren vorsieht.

13. Verfahren gemäß Anspruch 12, wobei dieses vor dem Verfahrensschritt des Aufbringens eines Dekors das Aufbringen eines Druckuntergrundes vorsieht.

## Claims

1. Decorative panel comprising a plate-shaped carrier made of a wood plastic composite (WPC) material, wherein the plate-shaped carrier in at least one edge region has a profile and/or a cutting edge, **characterized in that** the profile and/or cutting edge comprises a substantially sealed surface.

2. Decorative panel according to claim 1, wherein the WPC material comprises a plastic material from the group consisting of polyvinyl chloride (PVC), polyethylene (PE), polypropylene (PP), polyamide (PA), polystyrene (PS), acrylonitrile-butadiene-styrene (ABS), polymethyl methacrylate (PMMA), polycarbonate (PC), polyethylene terephthalate (PET), polyether ether ketone (PEEK), polyisobutylene (PIB), polybutylene (PB), or mixtures or co-polymerizates thereof.

3. Decorative panel according to any one of the preceding claims, wherein the panel comprises a decor applied onto the plate-shaped carrier by means of direct printing.

4. Method for producing a decorative panel, comprising the steps of:
- providing a plate-shaped carrier made of a WPC material; and
- introducing a profile and/or a cutting edge in at least one edge of the plate-shaped carrier;
**characterized in that** the surfaces of the introduced profile and/or cutting edge are subjected to a thermal treatment in which the WPC material is molten at least partially in the region of the profile and the surface is sealed.

5. Method according to claim 4, wherein the introduction of the profile and/or the the cutting edge is carried out by means of a machining or cutting process.

6. Method according to claim 5, wherein the melting of the WPC material is implemented by heating the cutting or machining tool used for the profiling and/or cutting of the at least one edge of the plate-shaped carrier to a temperature greater than or equal to the melting temperature and less than the decomposition temperature of the WPC material.

7. Method according to claim 6, wherein the machining or cutting tool is temperature controlled to a maximum temperature of 30°C above the melting temperature of the WPC material.

8. Method according to claim 6 or 7, wherein the temperature control of the cutting tool is implemented by a heating and/or cooling device.

9. Method according to any one of claims 5 to 8, wherein the temperature of the machining or cutting tool is monitored contact-free.

10. Method according to any one of claims 4 to 8, wherein at least the profiled region of the edge of the plate-shaped carrier is cooled down to a temperature below the melting point after the melting of the WPC material and sealing of the surface.

11. Method according to claim 10, wherein the cooling is carried out within a period of ≤ 60 s, preferably ≤ 45 s, in particular ≤ 30 s.

12. Method according to any one of claims 4 to 10, comprising a step for applying a decor by means of a direct printing process subsequently to the process step of providing the plate-shaped carrier.

13. Method according to claim 12, comprising a step for applying a printing base prior to the step of applying a decor.

## Revendications

1. Panneau décoratif, avec un support enforme de plaque constitué d'un matériau composite bois-plastique (WPC), où le support en forme de plaque présente au niveau d'au moins une région de bordure un profilé et/ou un bord coupant, **caractérisé en ce que** le profilé et/ou le bord coupant présente une surface essentiellement fermée.

2. Panneau décoratif selon la revendication 1, dans lequel le matériau WPC présente une matière plastique du groupe constitué le chlorure de polyvinyle (PVC), le polyéthylène (PE), le polypropylène (PP), le polyamide (PA), le polystyrène (PS), l'acrylonitrile-butadiène-styrène (ABS), le polyméthyl méthacrylate (PMMA), le polycarbonate (PC), le polyéthylène téréphtalate (PET), la polyéther éther cétone (PEEK), le polyisobutylène (PIB), le polybutylène (PB) ou des mélanges ou des co-polymérisats de ceux-ci.

3. Panneau décoratif selon l'une des revendications précédentes, dans lequel celui-ci présente un décor appliqué sur le support en forme de plaque au moyen d'une impression directe.

4. Procédé de fabrication d'un panneau décoratif, présentant les étapes de procédé :
- mise à disposition d'un support en forme de place constitué d'un matériau WPC ; et
- application d'un profilé et/ou d'un bord coupant au niveau d'au moins une arête du support en forme de plaque,
**caractérisé en ce que** les surfaces du profilé et/ou du bord coupant rapporté sont soumises à un traitement thermique, au cours duquel le matériau WPC dans la région du profilé est fondu au moins partiellement et que la surface est fermée.

5. Procédé selon la revendication 4, dans lequel l'application du profilé et/ou du bord coupant est effectuée au moyen d'un procédé enlevant des copeaux ou d'étirement.

6. Procédé selon la revendication 5, dans lequel la fusion du matériau WPC a lieu au moyen d'un chauffage de l'outil enlevant des copeaux ou d'étirement employé pour la création du profilé et/ou la découpe formant des copeaux ou d'étirement de l'au moins une arête du support en forme de plaque à une température supérieure à la température de fusion ou inférieure à la température de décomposition du matériau WPC.

7. Procédé selon la revendication 6, dans lequel l'outil enlevant des copeaux ou d'étirement est thermostaté au maximum à une température de 30 °C au-dessus de la température de fusion du matériau WPC.

8. Procédé selon l'une des revendications 6 ou 7, dans lequel la thermostatation de l'outil enlevant des copeaux a lieu par un dispositif de chauffage et/ou de refroidissement.

9. Procédé selon l'une des revendications 5 à 8, dans lequel la température de l'outil enlevant des copeaux ou d'étirement est surveillée sans contact.

10. Procédé selon l'une des revendications 4 à 8, dans lequel au moins la région profilée de l'arête du support en forme de plaque est refroidie à une température en-dessous du point de fusion après la fusion du matériau WPC et la fermeture de la surface.

11. Procédé selon la revendication 10, dans lequel le refroidissement a lieu dans un espace de temps ≤ 60 s, de préférence ≤ 45 s, notamment 30 s.

12. Procédé selon l'une des revendications 4 à 10, dans lequel celui-ci, après l'étape de procédé de la mise à disposition du support en forme de plaque, prévoit l'application d'un décor au moyen d'un procédé d'impression directe.

13. Procédé selon la revendication 12, dans lequel celui-ci prévoit avant l'étape de procédé de l'application d'un décor, l'application d'une couche de base d'impression.
